Europäisches Patentamt

**European Patent Office**

Office européen des brevets

(11) Publication number: **0 261 881**
**A2**

# EUROPEAN PATENT APPLICATION

(21) Application number: **87308251.5**

(22) Date of filing: **17.09.87**

(51) Int. Cl.4: **H01M 2/14 , B05D 1/18 , B05D 3/00**

(30) Priority: **18.09.86 US 909018**

(43) Date of publication of application:
**30.03.88 Bulletin 88/13**

(84) Designated Contracting States:
**AT BE CH DE ES FR GB GR IT LI LU NL SE**

(71) Applicant: **TIEGEL MANUFACTURING COMPANY**
**P.O. Box 830 495 Bragato Road**
**Belmont California 94002(US)**

(72) Inventor: **Wegner, Paul C.**
**1340 Eston Avenue**
**San Carlos California 94020(US)**

(74) Representative: **Goldin, Douglas Michael et al**
**J.A. KEMP & CO. 14, South Square Gray's Inn**
**London WC1R 5EU(GB)**

(54) **Enveloping a battery plate by a dip process.**

(57) A dip method of enveloping a battery plate with a microporous battery separator material involves first removing air bubbles from the plate by dipping the plate in an anhydrous liquid which may be a solvent or solvent/non-solvent solution, then dipping the plate into a second liquid comprising a polymer-solvent filler or polymer-solvent/non-solvent filler suspension After removal from the second liquid, the plate is dried by evaporation. The result is the formation of a microporous separator envelope about the battery plate. The plate may be dipped in a third liquid before drying. The third liquid may have a viscosity greater than that of the second liquid.

EP 0 261 881 A2

## ENVELOPING A BATTERY PLATE BY A DIP PROCESS

### Background of the Invention

#### Field of the Invention

This invention relates to battery separators, and in particular relates to forming a microporous separator envelope about a battery plate, such that the envelope functions as a battery separator for use in a lead-acid battery of the type, for example, used in automobiles.

#### Description of the Prior Art

In the prior art, it has been thought desirable to form a battery separator directly on the battery plate by a method of dipping the plate in one or more solutions. While prior art patents speak of such a process, in fact this desire has not been achieved in commercial practice.

To prevent the positive and negatively charged plates or electrodes of lead-acid batteries from coming into contact with each other, and thereby self-discharging the battery plates, sheets of separator material are positioned between the positive and negative battery plates. This separator material is usually comprised of pre-formed separator sheets which must be positioned either mechanically or manually between the positive and negative electrodes or sealed on three sides about one of the plate types, thereby enveloping them. In today's world of high-speed mass production, these techniques are slow, labor intensive, and most importantly generate large scrap rate losses when automated, and are an efficient process in the manufacture of batteries.

The present invention overcomes this necessity of enveloping the plates with separator material by mechanical process or positioning separator material between the plates. A separator envelop is produced simply by dipping the plate.

Prior patents have approached the idea of dipping or applying a coating on a battery plate. For example, see United States Patents 756,176 (March 29, 1904), 760,897 (May 24, 1904), 779,553 (January 10, 1905), 994,451 (June 6, 1911), 1,141,251 (June 1, 1915), 1,316,597 (September 23, 1919), 1,433,017 (October 24, 1922), 1,725,734 (August 20, 1929), 2,184,373 (December 26, 1939), 2,256,105 (September 16, 1941), 2,422,130 (June 10, 1947), 2,673,230 (March 23, 1954), 2,759,039 (August 14, 1956), 2,845,469 (July 29, 1958), 3,023,261 (February 27, 1962), 3,035,110 (May 15, 1962), 3,542,596 (November 24, 1970), 3,625,770 (December 7, 1971), 3,265,771 (December 7, 1971), 4,232,100 (November 4, 1980); British Patents 1890 (November 30, 1901) and 274,208 (July 19, 1927); and Canadian Patent 664,290 (June 4, 1963).

Other separator art patents include U.S. patent 364,344 (June 7, 1887), 2,569,361 (September 25,1951), 2,772,322 (November 27, 1956), 3,766,106 (October 16, 1973) and 4,251,605 (February 17, 1981).

For the past four years, I have been experimenting largely without success, on methods of dip coating plates to form a commercially acceptable separator thereabout. I tested the disclosures of a number of patents to determine their worth as a practical matter.

United States Patent 2,845,469 (July 29,1958) discloses the dipping of battery plates ostensibly to form a separator layer directly on the plate. That patent describes the formation of a layer on the outer surfaces of groups of battery plates by withdrawing the plate groups from a specific solution through a comb structure. The separator material and the dipping method disclosed therein do not provide a separator material nor a process for the formation of a separator material on a plate which would be suitable for a commercially useful lead-acid battery.

In evaluating this patent, I chopped ten grams of spun glass into one-quarter inch sections and placed the glass in a high shear mixer with 400 grams of water and shredded it for three minutes. I then blended in 20 grams of Kieselguhr (TLC Grade Baker analyzed), followed by 20 grams of lignin (that is, treated sawdust according to U.S. Patent 2,882,331) followed by 20 grams of dry wheat paste. Finally, I added 4 grams of phenolic resin used by Evan's Products, Paper Separator Division for the production of their current commercial paper separators. All of this was blended until uniform in consistency.

A formed negative plate, that is an electrode, was dipped repeatedly into this solution to try to achieve a coating. I noted that no substantial coating would stick to the plate.

2

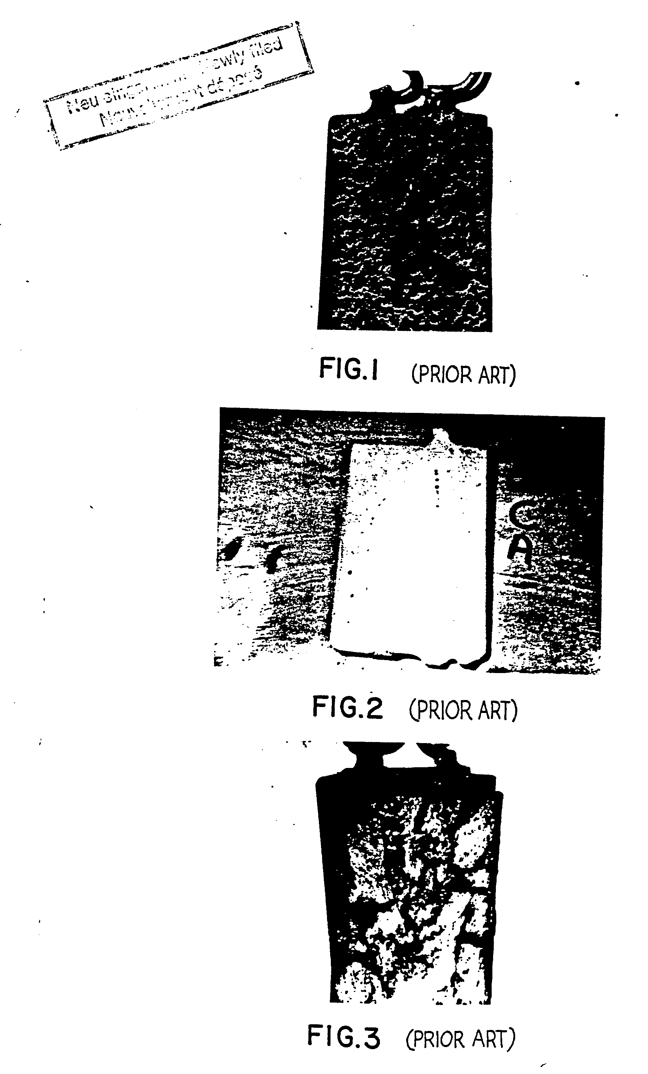

Nonetheless, following the teachings of the '469 patent, the plate was allowed to air dry and was baked at 340°F for five minutes as described in U.S. Patent 2,882,331 to cure the resin properly. The coated plate was photographed as shown in prior art Figure 1.

I noted that it had no separator and no envelope had been formed about the plate.

I had chosen these ingredients because they were described in the patent and appeared to be the best combination using the patent descriptions.

I also treated the disclosure of this patent using the following formulation:

200 grams of wheat flour
4000 grams water
200 grams Hi-Sil-233(finely divided silica $SiO_2$)
200 grams ammonium lignosulfate
200 grams chopped (1/4 inch) glass fiber
40 grams CASCO resin (5 H) (Urea Formaldehyde made by Bordens Chemical)

These ingredients were combined as directed by '469 patent.

The coating suspension was not thick enough to coat a battery plate as disclosed. In fact, when only half the required amount of water was added, the coating suspension still would not coat the plate. In an effort to obtain a coating on the plate, the formulation was heated to make the wheat flour thicken the formulation (like gravy) and still the formulation would not thicken enough to yield a coating suspension capable of coating the plate in one dip.

Since the coating suspension was not thick enough to obtain a coating on the plate after one dipping, the plates were subsequently dipped into the suspension and air dried repeatedly. After the material had been applied by repeated dipping and drying, the plates were allowed to air dry for one day and then were soaked in battery acid for one day. The soaking of the plates resulted in the coating falling off the plates and being dissolved.

In an attempt to obtain a coating similar, though not identical, to that disclosed in the patent and enhance its ability to remain in place on the plate, a mixture comprising 50 grams of resin (rather than 40 grams) and 25 grams Hi-Sil-233 (rather than 200 grams) was made. The plates were dipped into this mixture and immediately set up in water. However, the coating material again dissolved after 24 hours in the acid. From this experiment, it would seem that the use of Urea Formaldehyde was unacceptable for creating a battery separator or envelop. Furthermore, the formulation disclosed is not suitable for dip coating a battery plate in order to form a battery separator on the battery plate or an envelop about the plate.

U.S. Patent 4,251,605 discloses a acrylonitrile porous polymer membrane and a process for making it.

Two approaches to the Inoue patent were taken:

(1) 50 grams of polyacrylonitrile - methylacrylate 94:6 copolymer, by Polysciences was dissolved in 250 grams of dimethylformamide (DMF) to form a solution. The solution was cooled down to zero degrees C with ice. A 50/50 DMF water solution was also cooled down to zero.

A negative electrode was dipped in the cold polymer solution for three minutes. Bubbles appeared upon dipping the plate into the solution. Then the coated plate was immersed in the cold DMF water solution to coagulate the film for 15 minutes. Then the plate was washed in room temperature water for 30 minutes followed by three minutes immersion in a 85 degree C hot-water bath, and then finally allowed to air dry. A photograph was taken (prior art Figure 2). This plate was cycled and, compared with a control separator, a commercial paper separator of an inexpensive grade. The results of that test are as follows:

TABLE I

| PLATE 0 | INITIAL VOLTAGE CYCLE 0 | | | FINAL VOLTAGE CYCLE 0 | | | INITIAL AMPERAGE CYCLE 0 | | | FINAL AMPERAGE CYCLE 0 | | |
|---|---|---|---|---|---|---|---|---|---|---|---|---|
| | 1 | 2 | 3 | 1 | 2 | 3 | 1 | 2 | 3 | 1 | 2 | 3 |
| CA (INOUE) | 0.1 | 1.30 | 1.25 | 0.0 | 0.55 | 0.75 | 0 | 36 | 34 | 0 | 14 | 22 |
| CONTROL | 1.32 | 1.45 | 1.40 | 0.75 | 0.85 | 0.77 | 37 | 40 | 42 | 20 | 24 | 26 |

These figures show inferior cranking performance and unacceptable levels of pinholes clearly visable in prior art Figure 2.

It will be noted that in conducting this test, I did not use the nitric acid suggested by the patentee, because the acid would have reacted with the plate and generated large amounts of hydrogen gas bubbles which would have increased the number of pinholes.

I conducted a further test on this patent's disclosure, based on the best example which had the best listed separator properties, as follows:

(2) 50 grams of polyacrylonitrile - methylacrylate 94:6 copolymer, by Polysciences was dissolved in 250 grams of 70% nitric acid to form a solution. The solution was cooled down to zero degrees C, with ice. A 40% nitric acid solution was also cooled down to zero.

A negative electrode was dipped in the cold polymer solution for three minutes. Bubbles appeared upon dipping the plate into the solution. Then the coated plate was immersed in the cold 40% nitric acid solution to coagulate the film for 15 minutes. Then the plate was washed in room temperature water for 30 minutes followed by three minutes immersion at 85 degrees C hot water bath and then finally allowed to air dry. The plate is identified as Plate CB in prior art Figure 3. This shows that, as a practical matter, the material was so destroyed that it was totally unacceptable as a battery separator or enveloping material.

U.S. Patent 3,023,261 discloses a separator coating for alkaline nickel-cadmium cells. In accordance with this disclosure, one would first dip the plate in mixture consisting of a water insoluble synthetic resin (such as, polyvinyl chloride and, copolymers of various acrylonitrile-vinyl chloride compositions and, polyvinyl butyral, cellulose acetate, polyvinyl chloride or polyvinyl acetate) dissolved in a water soluble solvent, and a filler which is water swellable but insoluble in the polymer solvent. Next one would dip the plate in water to extract the solvent from the coating and set the resin.

In evaluating this patent the following examples were prepared in the following manner:

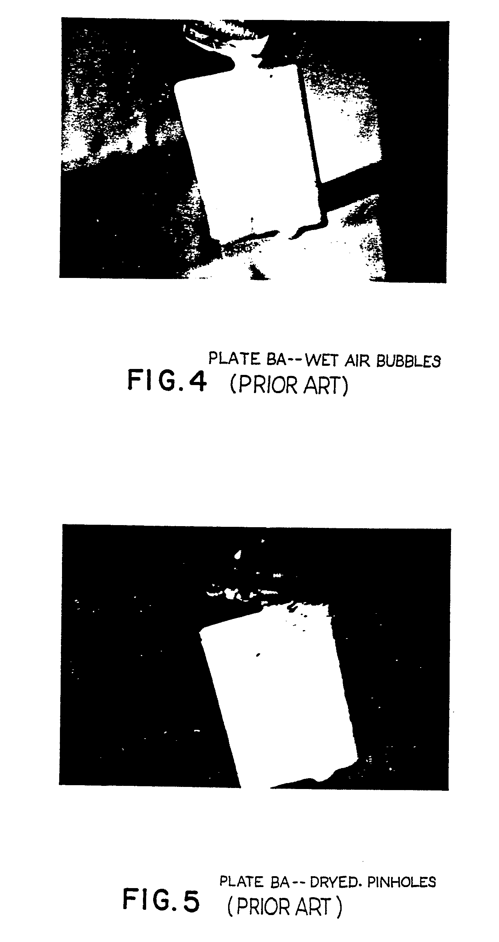

Polyvinyl chloride 100 grams (Geon 140 x 30 by B. F. Goodrich), was dissolved in dimethylformamide (DMF) 600 grams (636 ml). Cornstarch (400 grams) was added to the solution to form a coating mixture. This mixture was filtered through a sieve to eliminate any possible lumps. A dry charge negative electrode was dipped into the mixture for 3 minutes and then pulled out. Photograph prior art Figure 4 was quickly taken. It shows the air bubbles which will become pin holes. The plate was allowed to soak in water for five minutes. Then the plate was washed in cold water for two hours and air dried in a 60°C forced-air oven for one hour.

This plate passed the electrical pin hole test, but still leaked 10 milliamperes of current. The coating showed unacceptably large pin holes as indicated in the photograph of plate BA, prior art Figure 5.

It passed the electrical pin hole test, due to the great thickness of the coating.

The coating suspension gelled on standing for a few hours which made it unusable for purposes of dipping; the solvent having swelled the water swellable filler.

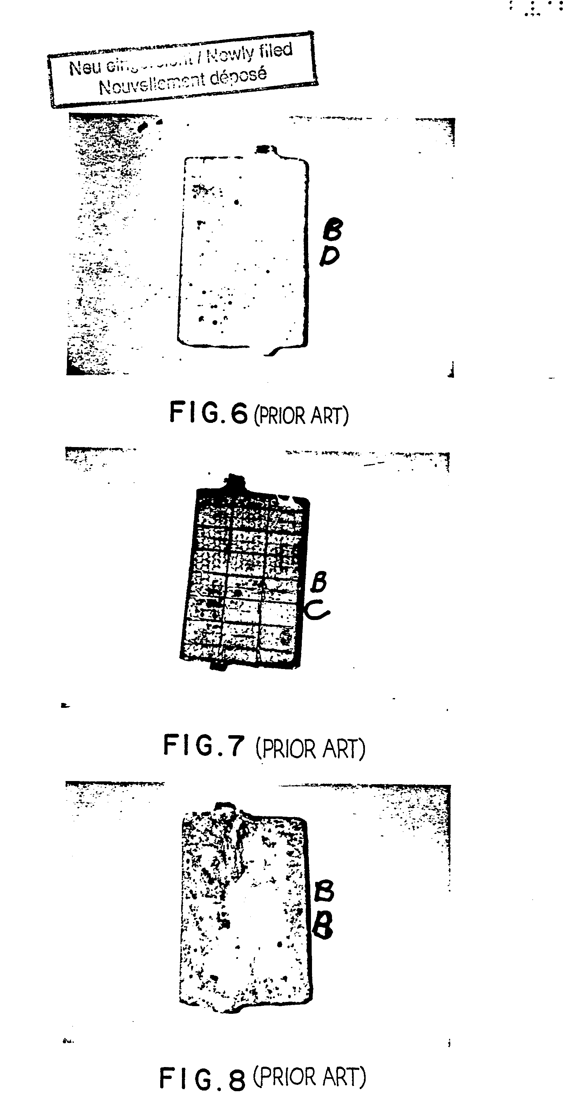

Polyvinyl butyral, by Aldrich Chemical Co., 7.5 grams was dissolved in methyl alcohol 120 grams. Then 45 grams of carboxyethyl cellulose, by Hercules, was added and the mixture mixed under high shear. A negative electrode was dipped into the coating suspension for three minutes and then immersed into water for five minutes. A photo was taken, prior art Figure 6. It shows that no significant coating resulted. Then the plate was washed in water for two hours and labeled as plate BC.

Polyvinylidene chloride, Saran Resin F-310 by Dow Chemical, 13,4 grams was dissolved in 108 grams of DMF (Dimethylformamide). Then 40 grams of polyvinyl alcohol, Gelvatol 20-30 by Monsanto, was blended in at high shear for three minutes. A negative dry charged plate was immediately dipped into the coating mixture for three minutes and then dipped into water for five minutes followed by washing in cold water for two hours. The plate was air dryed in a 60°C oven for 30 minutes. A photo was taken, prior art Figure 7, of the plate identified as BD. Again, as will be noted, the pin holes are unacceptable from a commercial battery separator standpoint. Furthermore, this coating suspension also gelled and became ususable after a few hours.

Cellulose acetate (CA-398-3) by Eastman Kodak) 20 grams was dissolved in 150 grams of acetone. Zein (62.5) was undippable so it was placed in a blender at high speed for three minutes. A dry charge plate was dipped for three minutes and then immersed in water for five minutes, followed by washing in cold water for two hours. The plate was dried in a 60 degrees C oven for 10 minutes. The plate BB, prior art photo Figure 8, indicates commercially unacceptable pin holes due to air bubbles.

The results of the cycle tests are described in Table II.

TABLE II

| PLATE 0 | INITIAL VOLTAGE CYCLE 0 | | | FINAL VOLTAGE CYCLE 0 | | | INITIAL AMPERAGE CYCLE 0 | | | FINAL AMPERAGE CYCLE 0 | | | LOUIS EXAMPLE |
|---------|------|------|------|------|------|------|----|----|----|----|----|----|----|
|         | 1    | 2    | 3    | 1    | 2    | 3    | 1  | 2  | 3  | 1  | 2  | 3  |    |
| BA      | 1.0  | 1.25 | 1.25 | 0.5  | 0.55 | 0.55 | 24 | 32 | 30 | 14 | 14 | 16 | 3  |
| BB      | 0.3  | 0.30 | 0.35 | 0.23 | 0.25 | 0.27 | 8  | 8  | 12 | 6  | 6  | 12 | 8  |
| BC      | 0.0  | 0.0  | 1.5  | 0.0  | 0.0  | 0.75 | 0  | 0  | 45 | 0  | 0  | 24 | 5  |
| BD      | 1.10 | 1.35 | 1.37 | 1.05 | 0.65 | 0.75 | 36 | 36 | 40 | 14 | 18 | 24 | 6  |
| CONTROL | 1.32 | 1.45 | 1.40 | 0.75 | 0.85 | 0.77 | 37 | 40 | 42 | 20 | 24 | 26 |    |

Results of this test show that the material did not provide an acceptable separator material because of the inclusion of unacceptable pin holes.

U.S. Patent No. 779,553 issued January 10, 1905 discloses the use of a first coat applied to a plate which dissolves in the battery electrolyte leaving a second coat as a sheath. This process can be referred to as "leaching". In accordance with the disclosure, the first coat is a syrup formed of lump sugar or saccharose dissolved in water. The second coat is applied by dipping in a solution comprised of, for example, tetra acetate of cellulose or a solution of tetra acetate of cellulose and tetra butyrate of cellulose or a solution of tetra butyrate of cellulose or a solution of castor-oil, essence of turpentine and nitrate of cellulose.

In testing the disclosure of this patent, the following solutions were prepared:
A. Cane Sugar, 150 grams; Water, 850 ml. Light Syrup.
B. Cane Sugar, 500 grams; Water, 500 ml. Medium Syrup.
C. Cane Sugar, 667 grams; Water, 333 ml. Heavy Syrup. (Saturated Sugar Solution)
D. Cellulose Acetate, 30 grams; Tetrahydrofuran, 200 ml.
E. Cellulose Acetatebutyrate, 60 grams; Tetrahydrofuran, 200 ml.
F. Cellulose Acetate, 30 grams; Methylethylketone, 200 ml.
G. Cellulose Acetate Butyrate, 60 grams; Methylethylketone, 200 ml.

The cellulose acetate and cellulose acetate butyrate were from Eastern Kodak and are respectively known as CA398-3 and CAB381-0.5.

## 0 261 881

**COMBINATIONS TRIED**

| PLATE AA | SUGAR | SUGAR SOAK | AIR DRIED | PLASTIC COATING | SOLVENT | PLASTIC SOAK |
|----------|-------|-----------|-----------|-----------------|---------|--------------|
| # | L M H | Time | | Type | | Time |
| AA | - - X | 10 min. | Yes | CA | THF | 30 min. |
| AB | - X - | 24 hrs. | No | CA | THF | 30 min. |
| AC | - X - | 5 min. | No | CAB | THF | 30 sec. |
| AD | - X - | 5 min. | No | CA | MEK | 30 sec. |
| AE | X - - | 10 min. | No | CA | THF | 30 sec. |
| AF | X - - | 30 min. | No | CAB | MEK | 30 sec. |

CA     = Cellulose Acetate

CAB     = Cellulose Acetate Butyrate

L     = Light

M     = Medium

H     = Heavy

THF     = Tetrahydrofuran

MEK     = Methylethylketone

Typical procedure:

Plate immersed in sugar solution for 10 minutes then immediately dipped into plastic solution for 1/2 minute followed by air-drying.

Typical results:

There was inadequate wetting of plate by the sugar solution. There was bubble formation upon dipping the plate into the plastic solution and then pinhole formation upon drying the plate.

The cellulose acetate film dissolved in battery acid after soaking at room temperature for less than 24 hours.

All the plates had pinholes. This was indicated visually and with an electronic pinhole test.

The Electronic Pinhole Test was as follows:

The coated plate was placed on a metal stand. Then a potential of one kilo volt AC is applied between the stand and plate. If more than 15 milliamperes passes through the coating, a pinhole was present.

The plates were charged for 10 hours and allowed to stand on open circuit. Each cell was discharged across a 0.1 or 0.5 ohm resistor for one minute. The initial and final voltages and amperages were recorded. Three charge, discharge cycles were performed. The experimental plates were labeled AA thru AE, (see Table III). The separators AA thru AE disintegrated, except for the control cell, which had a paper separator.

## TABLE III

| PLATE # | INITIAL VOLTS CYCLE # | | | FINAL VOLTS CYCLE # | | | INITIAL AMPERES CYCLES 1 | | | FINAL AMPERES CYCLES 11 | | |
|---|---|---|---|---|---|---|---|---|---|---|---|---|
| | 1 | 2 | 3 | 1 | 2 | 3 | 1 | 2 | 3 | 1 | 2 | 3 |
| AA* | 1.25 | 0 | .15 | 1.3 | 0 | 0 | 12.5 | 0 | 16.0 | 11.5 | 0 | 0 |
| AB | 1.4 | 0 | 0 | 1.0 | 0 | 0 | 16.0 | 0 | 0 | 10.0 | 0 | 0 |
| AC | .75 | .65 | 0 | .65 | 0 | 0 | 7.5 | 9 | 0 | 6.5 | 0 | c |
| AD | .2 | .75 | 0 | .15 | 0.32 | 0 | 2 | 32 | 0 | 1.5 | 6.4 | 0 |
| AE | 0.1 | 1.15 | 0 | 0.1 | 0.55 | 0 | 1.0 | 23 | 0 | 1.0 | 16.6 | 0 |
| Control | 1.5 | 1.25 | 1.25 | 1.3 | .72 | .70 | 13.2 | 21 | 16.0 | 12.7 | 14.4 | 10 |

*Discharged with a 0.1 ohm resister. In all subsequent discharge cycles a 0.5 ohm resister was used.

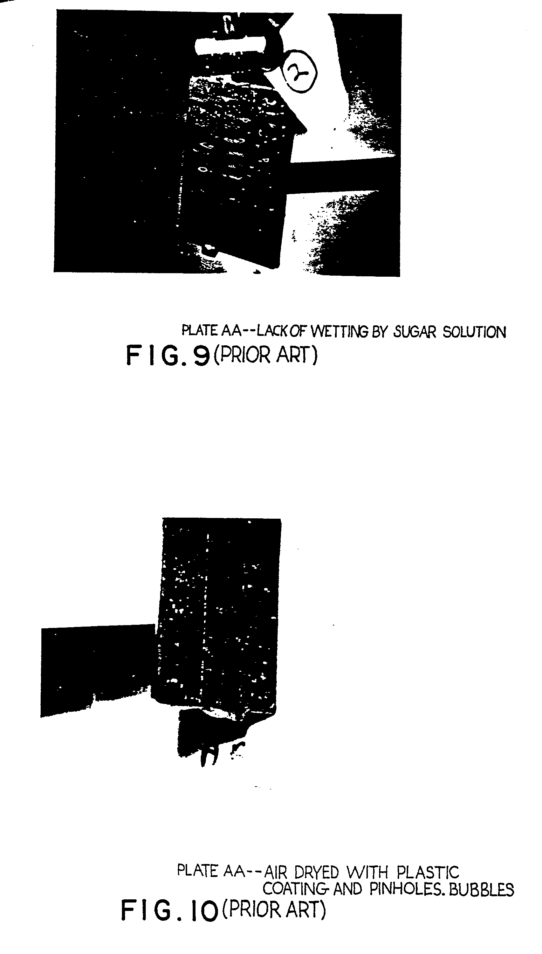

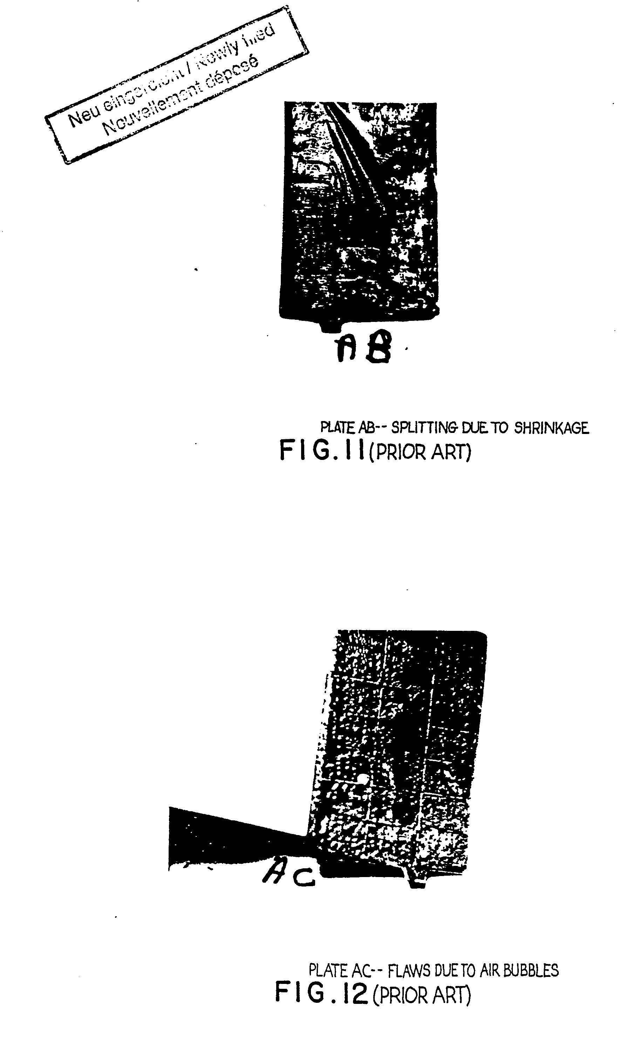

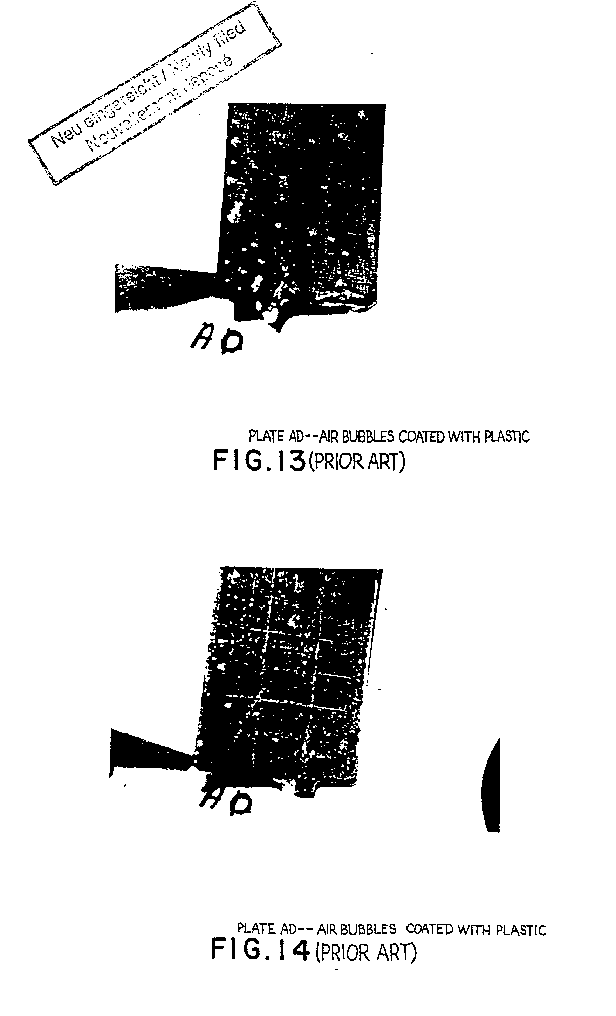

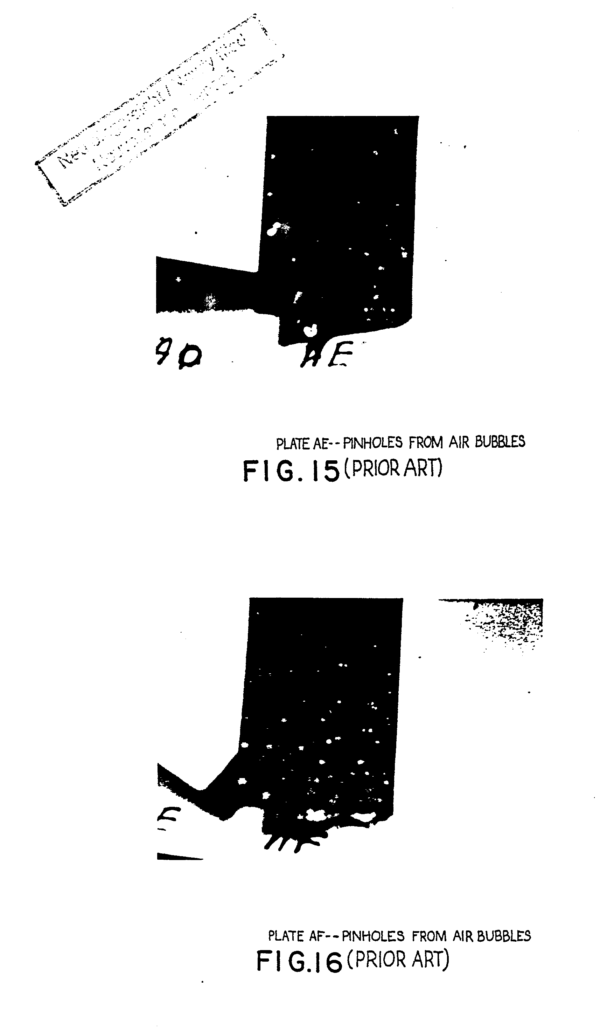

Initially, plates AA and AB gave better results than AD and AE, while plate AC was intermediate. This is because plates AA and AB had coatings, which dissolved in the battery acid and in effect approached being no separator at all. Plates (AD and AE) had coatings, which did not immediately dissolve in the battery; but completely insulated the plate and kept it from conducting electricity. On the second discharge, plates AA, AB, and AC indicated a shorting-out of the plates. On the other hand, plates AD, AE and AF begin to lose their coatings, which enabled them to conduct electricity. On the third and last discharge, all the coated plates had electrical discharge curves similar to shorted-out plates. On inspection all the coated plates had lost their coatings. The photographs, prior art Figures 9 through 17, clearly illustrate the before and after conditions of the plates.

Plates AG and AH were prepared in the following manner:

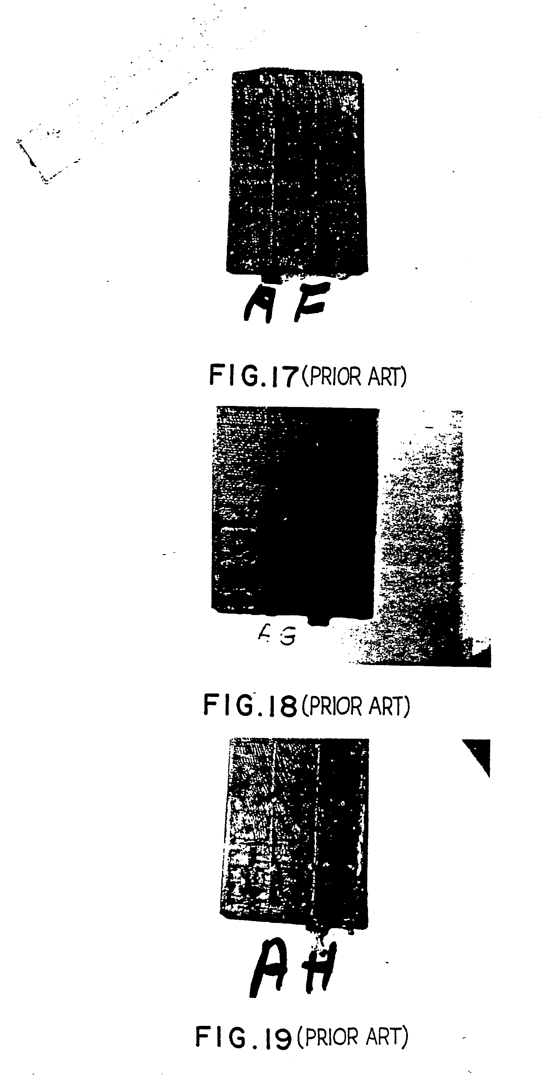

Cellulose nitrate, by Hercules Grade RS 1/2, 80 grams was dissolved in 200 milliliters of THF (Tetrahydrofuran) then 8 milliliters of castor oil was blended into the solution. A negative lead electrode was soaked in a light sugar solution "G" for 20 minutes. Then the plate was immediately immersed in the solution for three minutes and allowed to air dry. A photo was taken, prior art Figure 18, and then the plate was labeled AG. Once again, air bubbles formed upon immersion. Cellulose nitrate did not dissolve in turpentine as suggested in the patent. Cellulose nitrate, by Hercules Grade RS 1/2, 80 grams was dissolved in 200 milliliters of ethyl acetate, then 8 milliliters of castor oil was blended into the solution. A negative lead electrode was soaked in a light sugar solution "G" for 20 minutes. Then, the plate was immediately immersed in the solution for three minutes and allowed to air dry. A photo was taken, prior art Figure 19, and the plate labeled AH. Once again, air bubbles formed upon immersion.

Of all the plastics tried, in this patent, only cellulose acetate (i.e. tetra acetate of cellulose) was unstable in battery acid. However, cellulose-acetate butyrate was unstable when placed between two electrodes and placed on charge.

The cellulose nitrate when placed on charged and cycled was flawed because it had pinholes and electrically insulated the plate.

These tests show that this patent, like the others tested, did not produce by one or more dippings in a variety of coatings and compositions, an acceptable battery separator material on the plate or about the plate in the form of an envelope. Thus, the prior art taken either alone or in combination does not show a method of providing by a dip process an acceptable separator material about an electrode nor the product produced by such a method.

## SUMMARY OF THE INVENTION

It is the primary object of the present invention to provide a high-spaced process for the enveloping of battery plates with a microporous separator material.

The separator envelope material must be porous, inert to the environment of a lead acid battery and especially, it should be inert to the strong oxidizing of the positive plate. It should be wettable, free from commercially objectionable pinholes, conductive to ionic flow, tough and elastic to accommodate plate growth. It is a further object of this invention to provide such a material by dipping the battery plate in a solution and removing it into an environment in which evaporation completes the process of enveloping the battery plate. A still further object of this invention, is to complete that process with non-toxic materials.

In the light of the noted disadvantages of the previous methods for providing separators and to fulfill the stated objectives, the present invention now provides a high-speed dip process for the enveloping of battery plates in a microporous separator material.

I have discovered that the desirable objectives mentioned above can be achieved by the following method and the use of the following materials. A battery plate to be provided with a separator envelope is first dipped into a liquid in order to fill the pores of the plate and displace any gas bubbles therein. This wet plate is subsequently dipped into a coating liquid or suspension consisting of a polymer substantially in solution and inert, insoluble filler particles. The plate is then removed and allowed to air dry, thereby forming a microporous envelope about the plate.

I have further discovered that the presence of water in the initial solvent bath is undesirable, so that this solvent should be anhydrous. The solvent bath is the first liquid and the coating liquid is the second liquid.

Furthermore, the coating liquid should be of low viscosity to give a primary coat to the plate. After the primary coat, the plate is dipped in another coating material but this time the coating material has a higher viscosity than the primary coat, although it is a similar liquid. This higher viscosity coating liquid is the third liquid.

In a further embodiment of my invention, the plate is subsequently dipped into a non-solvent bath which initiates the precipitation of the polymer in the coating liquid or suspension. Then the plate is air dried. More than one dip in the polymer coating liquid or suspension followed by the subsequent non-solvent immersion and partial air drying may be desirable in order to enhance the thickness of the separator material about the edges and corners of the plate.

Advantages of my invention are: separators having extremely small pores and extremely high porosity can be formed; electrodes having very complex geometry can be easily enveloped with separator material; lighter separators can be formed; the separators which are formed have lower electrical resistance; there is a freer flow of electrolyte to the active mass through separators formed by this process; it is possible to vary the thickness of the separator; and the process can be conducted rapidly and continuously. Furthermore, depending on the materials selected, the process can be conducted at room temperature and no waste material by-products are formed as in the case of most leaching processes.

With this process, materials can be used which do not seem to poison a lead-acid battery environment the way, for example, starches did (see Vinal, "Storage Batteries", 4th Ed., John Wiley & Sons, Inc., N.Y. 1955, pages 58 and 146.); the materials will stretch and have good tensile strength when wet with electrolyte or dry; and because the material adheres to the plate very closely, more plates per volume of battery case are possible.

## Brief Description of the Drawings

Further objectives and a better understanding of the present invention will be made clear from the following detailed description of the invention taken in consideration with the drawings wherein:

Figures 1 through 19 are photographs of plates upon which I conducted tests of prior art disclosures;

Figure 20 is a block diagram of the preferred embodiment of the basic process of the present invention;

Figure 21 is a block diagram of a modification of the basic invention showing an additional step;

Figure 22 is a block diagram of a preferred embodiment of my invention; and

Figure 23 is a block diagram of further modification of the process showing additional steps.

## Brief Description of the Preferred Embodiment

Although specific forms of the invention have been selected for illustration in the drawings, and the following description is drawn in specific terms for the purpose of describing these forms of the invention, this description is not intended to limit the scope of the invention which is defined in the appended claims.

A battery plate envelope of microporous battery separator material and dip methods for preparing the envelopes are taught herein. According to this invention, the envelope may be formed in place directly on a battery plate or electrode. The preferred method is an evaporative process; although in other embodiments, a solvent-nonsolvent process is used in connection with the evaporative process.

If there is any porosity in the plate, it is critical that the plate be treated to fill any pores and displace any gas therein prior to dipping of the plate into the coating solution. Thereafter, the coated plate is allowed to air dry.

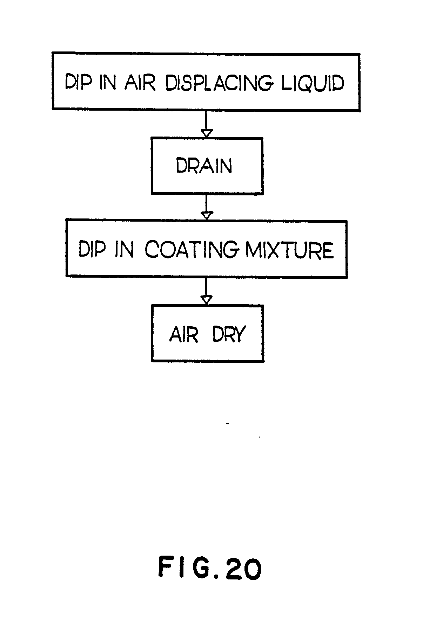

The block diagram shown in Figure 20 more completely shows the formation of a battery separator envelope about a battery plate. A prepasted and formed, or unformed, battery plate which is to be enveloped with separator material according to the most preferred embodiment of the present invention is brought into intimate contact with a liquid that displaces air bubbles. I have found that the material most suitable for this first dip is a liquid consisting of a solvent and a non-solvent. One such solvent is methylene chloride and one such non-solvent is methanol. These are mixed in the ratio by volume identical to that in the first or primary coating suspension.

It is critical that all materials be dry, that is, anhydrous, to get the best coating properties. Water in the coating suspension will interfere with the adhesion of the polymer with the filler. This is true even if the water appears in the first dip solvent/non-solvent solution.

It is most preferable to mix and retain the mixture in a closed chamber to avoid evaporation and the consequent changing of the composition of the mixture. An advantage of this mixture is that the materials are cheap, they will not support combustion, they have low heats of evaporation, low toxicity values and are non-carcinogenic.

The plates are immersed in this solution to drive out all of the air bubbles from the pores.

It may be desirable to soak the plates to insure that all of the gases are removed. The reason for removing the gases is to prevent the formation of pinholes in the separator material of the envelope during further processing. It is critical to remove this gas.

Once the plates have been dipped and the gas is removed, the plates are removed from the solvent, non-solvent solution and drained. Here again, this is preferably done in an environment which will not permit evaporation.

The plates are then soaked in a coating mixture for a sufficient time to insure adhesion of the coating to the plate.

A solution/suspension, which will temporarily form a coating on the plates, comprises most preferably the following materials in the proportions given:

500 ml. Methylene chloride,

125 ml Methanol

25 grams Polycarbonate resin (Lexan 141) as produced, for example, by General Electric

50 grams Kraton G 1650 as for example, produced by Shell Chemical Company (a Terblock Copolymer consisting of polystyrene and poly (ethylene-butylene) blocks to be described more fully hereinafter

150 grams (Dicalite WB-5(Diatomaceous earth)

Kraton G 1650 Thermoplastic rubber is described in Shell Chemical Company Technical Bulletin SC:35-80 as follows: a three block copolymer with polystyrene end blocks and a rubbery poly(ethylene-butylene) mid block.

Its typical properties are as follows:

## Typical Properties

### Tensile properties[1]

| | |
|---|---|
| Tensile strength psi | 5,000 |
| Elongation at break % | 500 |
| Modulus at 300% extension psi | 800 |
| Film appearance | Clear with water |

### Solution viscosity[2]

| | |
|---|---|
| 20% w in toluene cps | 1,500 |
| 25% w in toluene cps | 12,000 |
| Crumb size | About 1/2 inch |

---

[1]  Measured on films from toluene instron jaw separation rate ten inches per minute temperature 23°C. dumbbell specimens cut with ASTM die C.

[2]  Measured with a Brookfield Model RVT viscometer.

The above ingredients are mixed in the following manner. Dissolve polycarbonate in 400 ml. methylene chloride. Add Kraton G and mix. While still mixing, add the methanol slowly; for example, over a two minute period. Dilute the creamy mixture with 100 ml. methylene chloride. Then mix in the dicalite.

I have found that this provides a coating which has a high tensile strength, just enough elasticity to accommodate plate growth, a very high oxidation resistance, excellent electrical properties particularly useful in reducing plate formation times and presents a slick outside surface to prevent separator damage. As noted above, the percentage of methylene chloride to methanol is, most preferably, the same as that in the first dip.

For best results, the plate should be lowered at a slow uniform rate (one inch per second) into the coating mix and removed at a slow uniform rate (0.6 inch per second). This will prevent air bubbles from being drawn in on dipping and will likewise prevent the coating from being stripped off on removal of the plates from the mixture.

Once removed, the plates are dipped into a second coating liquid suspension which contains 50 ml. less methylene chloride than the primary coating solution. This is prepared the same way as the first suspension except in the step of adding the additional 100 ml. of methylene chloride, add 50 ml. instead.

The plates are then removed and permitted to dry in perfectly dry air. This evaporates the solvent methylene chloride first to produce a gelled coating. Upon further drying, the methanol evaporates leaving the plate enveloped in a microporous separator material having all of the desirable characteristics previously described.

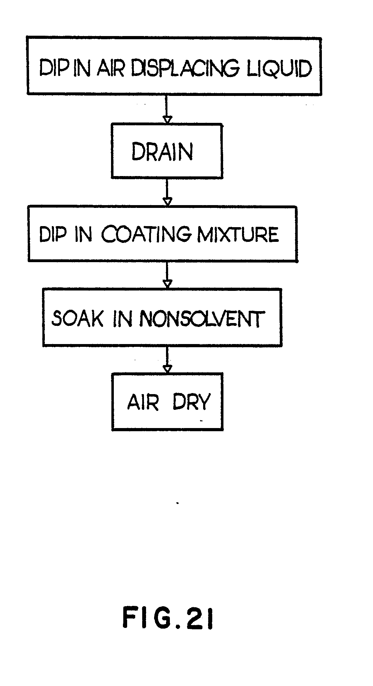

What I have described in these preferred processes, is an evaporative process rather than a solvent/non-solvent process (even though I have used the term solvent/non-solvent). This evaporative process is superior to a solvent/non-solvent process (which I will describe in connection with Figure 21) which is in effect a leaching process (that is, a liquid pulling out either another liquid or a solid from a coating material).

Such a solvent/non-solvent process is illustrated in Figure 21 wherein the evaporative process illustrated in Figure 20 has a further step of dipping in the non-solvent (following the coating dip), to remove the solvent from the coating. This dipping in non-solvent takes place immediately after the plates have been withdrawn from the second coating material.

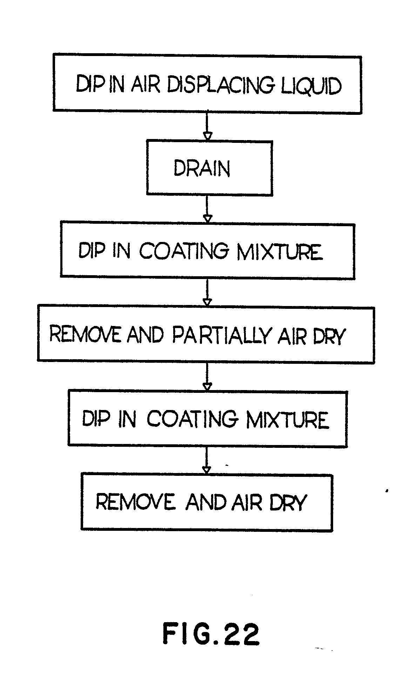

If desirable, to increase the thickness of the coating, an additional modification to the processes comprises adding the step of re-dipping in the second coating mixture after the first time it is dipped in the second coating suspension. In the evaporative process (Figure 20), this re-dipping (see Figure 22) would take place after partial air drying of the coating, (that is, after the second dip). It is not necessary to fully air dry and indeed it is preferred not to. After this additional dip, however, the plate would be fully air dried or dipped in a non-solvent and then air dried.

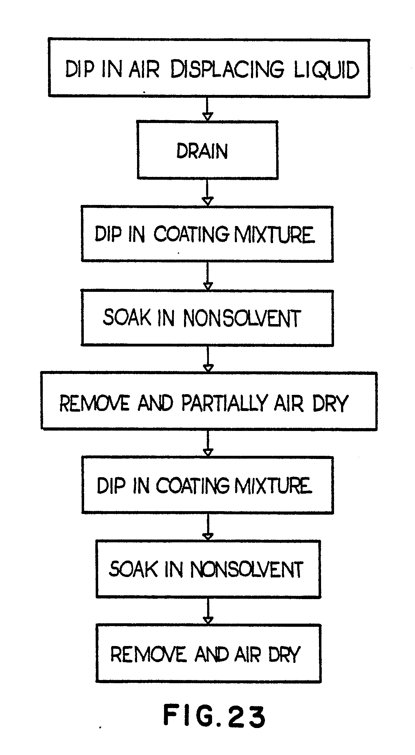

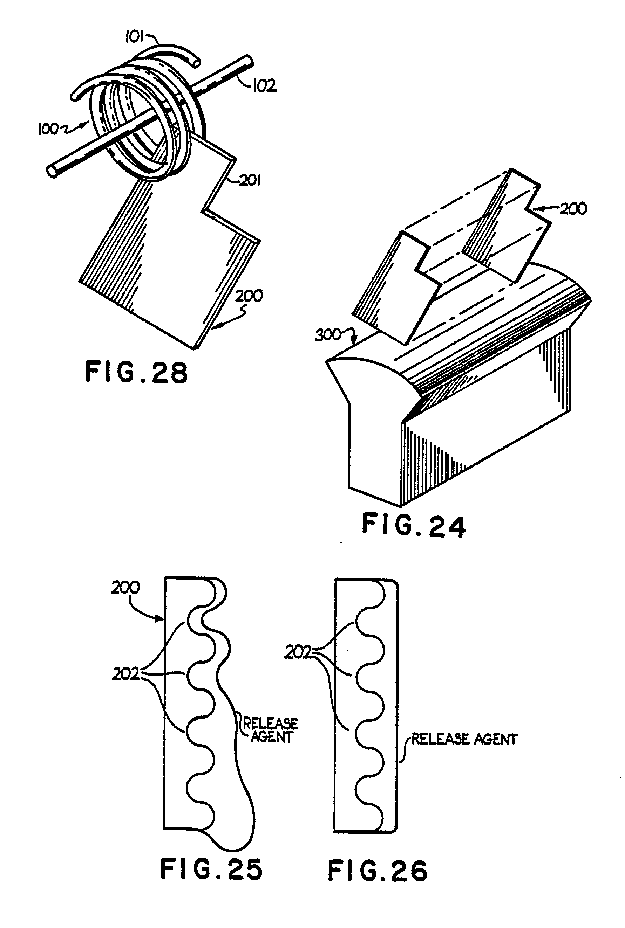

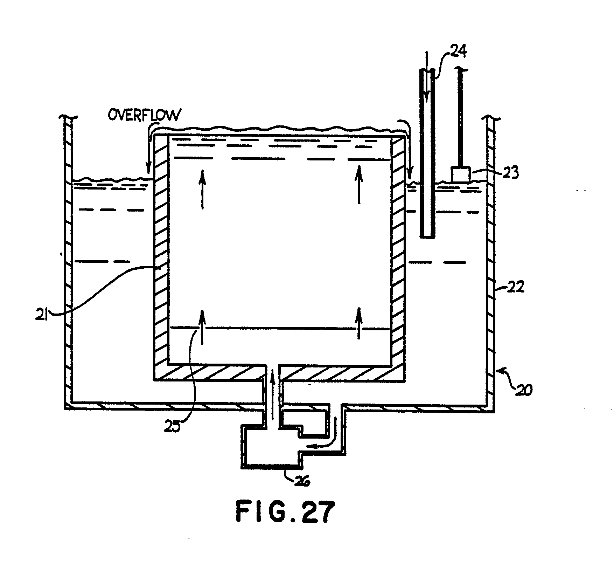

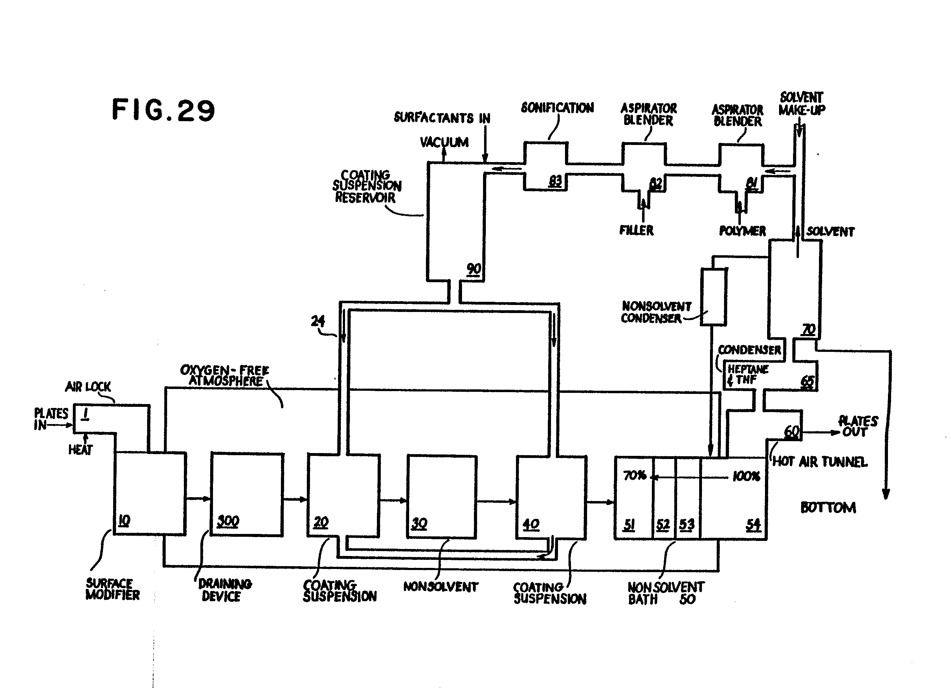

In the solvent/non-solvent process (Figure 21), the re-dipping (See Figure 23) in the coating mixture would take place after the third dip. Here again, it would be preferable to allow partial air drying before re-dipping in the coating mixture.

When the plate is withdrawn from the coating suspension, again it is preferred that an even uniform withdrawal be used. As with the insertion, the uniform rate of withdrawal helps to prevent unevenness of the coating. Any fast or jerking motions will cause the suspensions to fall to a lower portion of the plate and thereby destroy the evenness of the coating.

The rate of insertion into the nonsolvent bath must be somewhat slow because the coating of the liquid polymer coating suspension on the battery electrode is still fragile on the outer surface. By submerging the coated plate slowly, the integrity of the coating is not damage.

In the embodiment shown in Figure 22, the process proceeds through the following steps:

First, the plate is dipped most preferably in a solvent comprising methylene chloride. As indicated above, this is preferably anhydrous.

Next, the dipped plate is removed and dipped into a primary coating suspension comprising a polymer plus a filler which has a low viscosity to coat the inner surfaces of the pores of the plate and thereby insure adhesion of the polymer. In this suspension, there is a solution of methanol and methylene chloride (most preferably).

Next, the plate is removed and partially air dried and dipped into a coating mixture which can be considered the second coat and again comprises a polymer and filler, but this time of a higher viscosity.

Finally, the plate is removed and air dried.

In a still further embodiment, instead of air drying after this last dip in the polymer and filler suspension, the plate may be dipped in a non-solvent and then removed and air dried.

The temperature of the dipped coat suspension, dipping rates, and drying times are important. The preferred temperature range for air and all liquids is 18°C. to 35°C. A suggested dipping schedule for 18°C. is:

1. Soak the group or plate in methylene chloride/methanol for 60 seconds and remove;
2. Dip in a primary coating suspension by lowering into liquid over a 2 second period;
3. Soak in a coating suspension for 120 seconds;
4. Pull out over a 7 second period;
5. Dip in the second coating suspension over a 4 second period;
6. Pull out over a 7 second period;
7. Air dry for 20 seconds;
8. Dip in the second coating suspension over a 4 second period;
9. Pull out over a 7 second period; and
10. Air dry until completely dry.

This insures that all of the polymers will stay in the solution and that the coating thickness will be consistent.

Dipping schedules may vary with the temperature of the liquids and the air.

The viscosity of the coating suspension must be low enough not to trap air bubbles, but thick enough to form at least a 0.015 inch coating in 4 or less dips.

The greater the alcohol content, the greater the adhesion to the plate. Too much alcohol makes the coating non-uniform. At first it was thought that it would be impossible to make a coating that would stick permanently to the plate, especially during charging. However, it has been found that if the bubbles were never allowed to form until they passed through the separator material, the hydrogen gas could not exert pressure on the coating. Thus, hydrogen will stay in the dissolved state until it passes through the coating.

In any event, the gases in the plate are required to be displaced before dipping in the coating suspension.

The reason why the solvent should be dry is because moisture tends to cause the coating to develop cracks. This happens because the water clings to the filler and keeps the plastic from sticking to the filler particles. Increase in the alcohol content increases separator coating adhesion to the plate. However, too much alcohol decreases the uniformity of the coating.

Increasing the methylene chloride content reduces pinholes and increases coating smoothness and uniformity. However, increasing methylene chloride content reduces adhesion to the plate.

Both of the polymer suspensions are maintained at room temperature, but the nonsolvent bath may not need to be maintained at room temperature. If the temperature of the nonsolvent bath is raised above room temperature, it is theorized that the precipitation on the surface of the film will be enhanced.

The second contact with the nonsolvent material may simply be by dipping in a single concentration nonsolvnet composition, or a more complicated process may be used. The purpose of this step is to form the separator into the required microporous material as quickly as possible. To achieve complete precipitation of the polymer, the nonsolvent bath may have a gradient of nonsolvent concentrations through the bath, rather than have a single concentration throughout. These gradients can be achieved by using a series of individual tanks with varying concentrations and temperatures in each tank or, perhaps one tank with the variable conditions therealong might be possible.

The nonsolvent gradient appears to be important in terms of initial contact with the plates which have just been removed from the second coating suspension. It is theorized that if the strongest nonsolvent (100% nonsolvent) is contacted initally, the pore size created by the polymer precipitation will be very small, since the strong nonsolvent concentration will cause the polymer to precipitate quickly at the outer surface of the coating. This should also produce a very tight skin on the outside of the separator which will prevent rapid defusion of the remaining nonsolvent into the rest of the polymer coating, and thus inhibit complete precipitation of the polymer. Also, having the strongest nonsolvent concentration (even 100%) in the last tank should assure complete precipitation of the polymer from the polymer solution due to the high concentration of nonsolvent therein precipitating any remaining polymer.

It may also be helpful to adjust the temperatures of the various tanks or in a continuous gradient in a large single tank to provide an increase in temperature as the nonsolvent concentration increases. If the temperature is high too early it is believed that the outer surface of the separator material will precipitate more quickly and create a tight outer skin which will slow the overall dispersion of the nonsolvent into the coating suspension, thereby inhibiting total precipitation of the polymer or even dissolving the coating due to the high solubility of polymers at higher temperatures. Furthermore, a higher temperature higher concentration gradient may help to continue to precipitate any unprecipitated polymer as the material passes from tank to tank.

If after two coatings the surface pore structure is too large, and it is desired to achieve a separator with very small pores on the outer surface, it may be helpful to dip the twice-coated plate into the coating suspension for a third time followed by immersion in a 100% nonsolvent solution. This third dipping (illustrated in the example above) and the immediate contact with the 100% nonsolvent is theorized to cause the polymer to precipitate quickly and produce an outer separator skin with a very tight pore structure.

When the plates which are to be completely air dried (regardless of the process steps they have undergone) hot air, most preferably without oxygen, may be used to shorten evaporation time.

Additional observations seem to indicate that deterioration in mechanical properties occurs when approaching approximately 80% filler with respect to the total amount of polymer and filler in the polymer solution/suspension. Furthermore, it appears that a polymer solution/suspension should contain just less than the amount of polymer (with respect to the total amount of polymer and solvent used) than is required to begin to gel the suspension.

There are additional advantages of the process. The envelope fits closer to the plates than in the prior art, so it is possible to enclose more plates within the standard battery containers. There is no treeing across or around battery electrodes since the electrodes are entirely encapsulated with the tight-fitted coating. Furthermore, the use of such a battery separator envelope may eliminate the need for mud wells in battery containers, since the tight fit of the separator material will prevent any material from falling from the battery plates. If anything, there may be a necessity to provide a resilient mat at the bottom to protect the envelope from shock and abuse. The negative electrodes can be made small, since there is no lead lost during the use of the battery. Also, this tight enveloping gives additional strength to the plates and promotes faster formation.

Because the envelop fits closely to the battery plate, lead dust particle formation is inhibited. When the battery becomes heavily sulfated there should be less problem with recharging the battery, since none of the sulfated particles can fall away from the battery plate between the plate and the separator. Furthermore, because of the tight fit of the separator coating, the plates should not start blistering. Blistering is the first step toward sloughing of the active material from the grids.

It will be understood that various changes in the details, materials and arrangements of parts which have been herein described and illustrated in order to explain the nature of this invention may be made by those skilled in the art within the principle and scope of the invention as expressed in the following claims.

It will further be understood that the "Abstract of the Disclosure" is intended to provide a non-legal technical statement of the contents of the disclosure in compliance with the Rules of Practice of the United States Patent and Trademark Office, and is not intended to limit the scope of the invention described and claimed herein.

CROSS-REFERENCE TO RELATED APPLICATIONS

This application is a continuation-in-part of my prior co-pending application Serial No. 06/728,662, filed April 29, 1985, entitled, "Enveloping A Battery Plate By A Dip Process and Product Produced Thereby", which in turn was a continuation of my prior application Serial No. 597,475, filed April 6, 1984, entitled "Enveloping A Battery Plate by a Dip Process And Product Produced Thereby", which in turn is a continuation-in-part of my prior co-pending application Serial Number 482,874 filed April 7, 1983 entitled, "Process For The Formation Of Battery Separators And Product Produced Thereby" which in term was a continuation of my prior application Serial Number 253,283 filed April 13, 1981 entitled, "Process For The Formation Of Battery Separators And Product Produced Thereby" and this application incorporates by reference the disclosure of those prior applications as if the disclosure of each was fully set forth herein.

**Claims**

1. A dip method of enveloping a battery plate with a commercially acceptable separator material, characterised in that the method comprises the steps of:-
    (a) displacing the air from the plate by dipping in an anhydrous first liquid comprising a solvent;
    (b) dipping the plate in a second liquid which comprises a polymer dissolved in a solvent/non-solvent mixture and a filler in suspension; and
    (c) removing the plate and allowing the solvent/non-solvent to evaporate and form, about the plate, an envelope of porous separator material.
2. A method according to claim 1 wherein the first liquid also comprises a non-solvent.
3. A method according to claim 1 or 2 wherein the solvent/non-solvent mixture used in step (b) is anhydrous.
4. A dip method of enveloping a battery plate with a commercially acceptable separator material, characterised in that the method comprises the steps of:-
    (a) displacing the air from the plate by dipping in a first liquid;
    (b) dipping the plate in a second liquid comprising a polymer dissolved in a solvent/non-solvent mixture and a filler suspension having a first viscosity;
    (c) removing the plate and allowing it to partially dry;
    (d) dipping the plate in a third liquid having a viscosity higher than that of the second liquid, which third liquid comprises a polymer dissolved in a solvent/non-solvent mixture and a filler in suspension; and
    (e) removing the plate and allowing the solvent/non-solvent to evaporate and form, about the plate, an envelope of porous separator material.
5. A method according to claim 4 in which the first liquid is anhydrous.
6. A method according to any one of the preceding claims in which the first liquid comprises an anhydrous mixture of methylene chloride and methanol.
7. A method according to any one of the preceding claims in which the second liquid comprises an anhydrous mixture of methylene chloride and methanol.
8. A method according to any one of the preceding claims in which the ratio of solvent to non-solvent is the same in the second liquid as it is in the first liquid.
9. A method according to any one of claims 4 to 8 in which, after the dipping in the second liquid, the plate is removed and dipped in a non-solvent and then removed and allowed to air dry to form the separator.
10. A method according to any one of claims 4 to 8 in which the liquids consist essentially of the following substances in the following amounts:
    (a) first liquid - solvent/non-solvent
500 ml methylene chloride
125 ml methanol
    (b) second liquid -
500 ml methylene chloride
125 ml methanol
75 grams polymer
150 grams filler

(c) third liquid -
450 ml methylene chloride
125 ml methanol
75 grams polymer
150 grams filler.

11. A method of enveloping a battery plate according to any preceding claim wherein the second liquid is prepared by

(a) dissolving a first quantity of polymer in a solvent;

(b) adding a second quantity of polymer with mixing and while still mixing adding a non-solvent slowly; and

(c) diluting the mixture with a further amount of the solvent and then mixing in a filler.

12. A method of enveloping a battery plate according to any one of claims 4 to 11 wherein the third liquid is prepared by:

(a) dissolving a first quantity of polymer in a solvent;

(b) adding a second quantity of polymer with mixing and while still mixing adding a non-solvent slowly; and

(c) diluting the mixture with a further amount of the solvent such that the viscosity of the resulting liquid is higher than that of the second liquid according to claim 4, and then mixing in a filler.

13. A method according to claim 11 or 12 wherein the first quantity of polymer comprises polycarbonate and the solvent is methylene chloride.

14. A method according to any one of claims 11 to 13 in which the second quantity of polymer comprises Kraton G.

15. A method according to any one of claims 11 to 14 in which the slow addition of non-solvent takes place over approximately a 2 minute period.

16. A method according to any one of claims 10 to 15 in which the filler is Dicalite.

FIG.1    (PRIOR ART)

FIG.2    (PRIOR ART)

FIG.3    (PRIOR ART)

PLATE BA--WET AIR BUBBLES

FIG.4 (PRIOR ART)

PLATE BA-- DRYED. PINHOLES

FIG.5 (PRIOR ART)

**FIG.6** (PRIOR ART)

**FIG.7** (PRIOR ART)

**FIG.8** (PRIOR ART)

PLATE AA--LACK OF WETTING BY SUGAR SOLUTION

FIG. 9 (PRIOR ART)

PLATE AA--AIR DRYED WITH PLASTIC
COATING AND PINHOLES. BUBBLES

FIG. 10 (PRIOR ART)

PLATE AB-- SPLITTING DUE TO SHRINKAGE

FIG.11(PRIOR ART)

PLATE AC-- FLAWS DUE TO AIR BUBBLES

FIG.12 (PRIOR ART)

0 261 881

PLATE AD--AIR BUBBLES COATED WITH PLASTIC

# FIG.13 (PRIOR ART)

PLATE AD-- AIR BUBBLES COATED WITH PLASTIC

# FIG.14 (PRIOR ART)

PLATE AE-- PINHOLES FROM AIR BUBBLES
## FIG. 15 (PRIOR ART)

PLATE AF-- PINHOLES FROM AIR BUBBLES
## FIG.16 (PRIOR ART)

FIG.17 (PRIOR ART)

FIG.18 (PRIOR ART)

FIG.19 (PRIOR ART)

```
┌─────────────────────────────────────┐
│   DIP IN AIR DISPLACING LIQUID      │
└─────────────────────────────────────┘
                  │
                  ▽
          ┌───────────────┐
          │     DRAIN      │
          └───────────────┘
                  │
                  ▽
┌─────────────────────────────────────┐
│      DIP IN COATING MIXTURE         │
└─────────────────────────────────────┘
                  │
                  ▽
          ┌───────────────┐
          │    AIR  DRY    │
          └───────────────┘
```

FIG. 20

```
┌─────────────────────────────┐
│  DIP IN AIR DISPLACING LIQUID │
└─────────────────────────────┘
               │
               ▼
        ┌─────────────┐
        │    DRAIN    │
        └─────────────┘
               │
               ▼
   ┌─────────────────────────┐
   │  DIP IN COATING MIXTURE  │
   └─────────────────────────┘
               │
               ▼
   ┌─────────────────────────┐
   │   SOAK IN NONSOLVENT     │
   └─────────────────────────┘
               │
               ▼
        ┌─────────────┐
        │  AIR  DRY   │
        └─────────────┘
```

FIG.21

```
┌─────────────────────────────────┐
│   DIP IN AIR DISPLACING LIQUID  │
└─────────────────────────────────┘
                 │
                 ▼
        ┌─────────────────┐
        │      DRAIN      │
        └─────────────────┘
                 │
                 ▼
   ┌──────────────────────────┐
   │   DIP IN COATING MIXTURE │
   └──────────────────────────┘
                 │
                 ▼
 ┌──────────────────────────────┐
 │ REMOVE AND PARTIALLY AIR DRY │
 └──────────────────────────────┘
                 │
                 ▼
   ┌──────────────────────────┐
   │   DIP IN COATING MIXTURE │
   └──────────────────────────┘
                 │
                 ▼
    ┌────────────────────────┐
    │   REMOVE AND AIR DRY   │
    └────────────────────────┘
```

FIG.22

```
┌─────────────────────────────────┐
│   DIP IN AIR DISPLACING LIQUID  │
└─────────────────────────────────┘
                 │
                 ▼
          ┌─────────────┐
          │    DRAIN    │
          └─────────────┘
                 │
                 ▼
      ┌─────────────────────────┐
      │  DIP IN COATING MIXTURE │
      └─────────────────────────┘
                 │
                 ▼
      ┌─────────────────────────┐
      │   SOAK IN NONSOLVENT    │
      └─────────────────────────┘
                 │
                 ▼
    ┌──────────────────────────────┐
    │ REMOVE AND PARTIALLY AIR DRY │
    └──────────────────────────────┘
                 │
                 ▼
      ┌─────────────────────────┐
      │  DIP IN COATING MIXTURE │
      └─────────────────────────┘
                 │
                 ▼
      ┌─────────────────────────┐
      │   SOAK IN NONSOLVENT    │
      └─────────────────────────┘
                 │
                 ▼
      ┌─────────────────────────┐
      │    REMOVE AND AIR DRY   │
      └─────────────────────────┘
```

FIG.23

FIG.28

FIG.24

FIG.25    FIG.26

FIG.27

## FIG.29

0 261 881